# EUROPÄISCHE PATENTSCHRIFT

(11) **EP 4 027 936 B1**
(45) Veröffentlichungstag und Bekanntmachung des Hinweises auf die Patenterteilung: **24.01.2024**
(21) Anmeldenummer: 20771540.0
(22) Anmeldetag: 10.09.2020
(51) Int. Cl.: A61C 13/00, A61C 13/12, B23Q 3/06

(54) **HALTEVORRICHTUNG FÜR EIN DENTALES WERKSTÜCK**
RETAINING DEVICE FOR A DENTAL WORKPIECE
DISPOSITIF DE RETENUE D'UNE PIÈCE DENTAIRE

(30) Priorität: 12.09.2019 AT 507962019
(43) Veröffentlichungstag der Anmeldung: 20.07.2022
(73) Patentinhaber: STEGER, Heinrich, 39031 Bruneck (IT)
(72) Erfinder: STEGER, Heinrich, 39031 Bruneck (IT)
(74) Vertreter: Torggler & Hofmann Patentanwälte - Innsbruck
(86) Internationale Anmeldenummer: PCT/EP2020/075376
(87) Internationale Veröffentlichungsnummer: WO 2021/048299

(56) Entgegenhaltungen:
- DE-A1-102012 201 744
- DE-A1-102012 201 744
- DE-U1-202010 001 125
- DE-U1-202010 001 125
- DE-U1-202013 103 515
- DE-U1-202013 103 515
- US-A1- 2016 317 258

## Beschreibung

Die vorliegende Erfindung betrifft eine Haltevorrichtung für ein, insbesondere scheibenförmiges, dentales Werkstück mit den Merkmalen des Oberbegriffs des Anspruchs 1. Zudem betrifft die vorliegende Erfindung eine Bearbeitungsvorrichtung zum Bearbeiten eines dentalen Werkstücks mit einer solchen Haltevorrichtung sowie ein Verfahren zum Bearbeiten eines dentalen Werkstücks in einer solchen Bearbeitungsvorrichtung.

Für die Bearbeitung von dentalen Werkstücken gibt es seit vielen Jahren diverse Maschinen. Oftmals werden sogenannte CNC-Bearbeitungsmaschinen eingesetzt. In diesen Maschinen werden dentalen Werkstücke bearbeitet. Meist bestehen diese dentalen Werkstücke aus einer Keramik, aus Zirkon oder aus Metall. Die Bearbeitung erfolgt z.B. durch Fräsen, Schleifen, Schneiden oder ähnliches.

Beispiele von Haltevorrichtungen für ein, insbesondere scheibenförmiges, dentales Werkstück sind in den Druckschriften DE 20 2013 103 515 U1, DE 10 2012 201 744 A1, DE 20 2010 001 125 U1 und US 2016/317258 A1 offenbart.

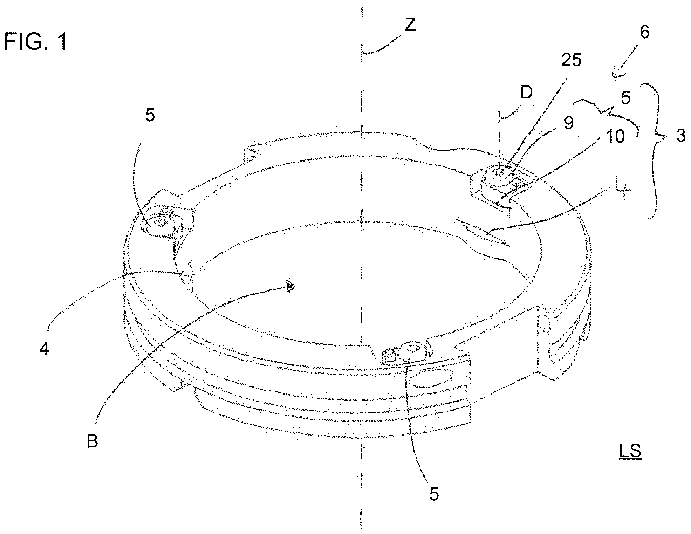

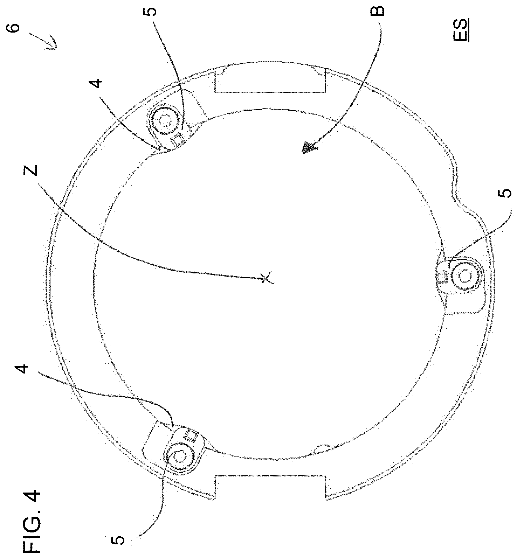

Ein Beispiel für eine Vorrichtung geht aus der EP 3 216 420 B1 hervor. Im Speziellen wird darin ein Haltering gezeigt, an welchem ein dentales Werkstück einspannbar ist. Konkret ist an der Innenseite des Halterings ein in Richtung einer Zentralachse ragender Vorsprung angeordnet (siehe z. B. Bezugszeichen 8 in den Fig. 1b und 4b). Zudem gibt es sogenannte Spannteile, die am Haltering drehbar gelagert sind, wobei in einer Spannstellung das dentale Werkstück (Rohling) zwischen drei Spannteilen und drei korrespondierenden Spannflächen eingespannt wird.

Eine weitere Vorrichtung geht aus der EP 2 628 566 B1 hervor. Auch hier wird auf ähnliche Weise in einen Haltering mit drei Befestigungselementen das dentale Werkstück eingespannt.

Demgegenüber zeigt die EP 3 047 818 B1 einen gattungsfremden Stand der Technik. Hier wird nicht der Rohling direkt an den radial in Richtung einer Zentralachse ragenden Auflageflächen eingespannt, sondern es wird eine separate Haltevorrichtung (Spannblock bzw. Spannmechanismus) am Haltering festgespannt. Diese separate Haltevorrichtung ist wiederum so ausgebildet, dass über eine Befestigungsvorrichtung (z. B. in Form eines mit einem Spalt versehenen Spannkeils oder Spannrings) mehrere kleinere Werkstücke (Rohlinge) an dieser Haltevorrichtung festgeklemmt werden. Nachteilig hierbei ist unter anderem, dass die Befestigung der einzelnen Rohlinge nur durch eine in radialer Richtung verlaufende Spann- bzw. Klemmkraft erfolgt. Wenn das Werkstück also aus irgendwelchen schmaler als vorgesehen ausgebildet ist, so kann es nicht festgehalten werden. Zudem ist bei einer solchen Verklemmung ein Verrutschen in axialer Richtung möglich.

Eine weitere Vorrichtung mit einem Blankhalter (entspricht einer Haltevorrichtung) für eine Dentalfräsmaschine geht aus der DE 10 2018 000 338 A1 hervor. Hier zeigen vor allem die Fig. 1 bis 6 einen Stand der Technik, demgemäß ein dentales Werkstück an einem radial nach innen gerichteten Vorsprung eines Halterings aufliegt. In diesem Fall wird diese Auflagefläche als Auflagerand (Bezugszeichen 51) bezeichnet, welcher radial in den Spannring (Bezugszeichen 50) ragt. Diese DE 10 2018 000 338 A1 zeigt ebenfalls ein gattungsfremdes Ausführungsbeispiel in den Fig. 18 und 19. Hier wird ein sogenannter Blankadapter (Bezugszeichen 106) über Fixieransätze in einem Randbereich der Aufnahme eingesetzt. Der Blankadapter dient der Halterung von quaderförmigen Rohlingen, die in entsprechenden Aufnahmen des Blankadapters mittels Schrauben lagerichtig fixiert werden. Dadurch kann der Blankhalter nicht nur für zylindrische, scheibenförmige Rohlinge genutzt werden, sondern für quaderförmige Rohlinge als Werkstück. Nachteilig ist hier, dass über diesen zusätzlichen Blankadapter keine zylindrischen, scheibenförmigen Werkstücke gehalten werden können, sondern nur kleinere quaderförmige Werkstücke. Dies ist vor allem deshalb der Fall, da der Blankadapter nicht ringförmig ausgebildet ist.

Generell ist es bei den Haltevorrichtungen oftmals notwendig, das dentale Werkstück im Zuge der Bearbeitung aus der Haltevorrichtung zu entnehmen, beispielsweise um andere Werkstücke in der Zwischenzeit zu bearbeiten oder um das halb-bearbeitete Werkstück zu vermessen. Ein Problem besteht dann darin, dieses Werkstück für eine weiterführende Bearbeitung wieder exakt in die Haltvorrichtung bzw. deren Haltering einzuspannen. So kann es vorkommen, dass das Werkstück z. B. um einige Millimeter verrückt ist, was zu Fehlern in der weiteren Bearbeitung führt. Die Bearbeitung ist dadurch ungenau und führt im schlechtesten Fall sogar zu unbrauchbaren bearbeiteten Werkstücken.

Die Aufgabe der vorliegenden Erfindung besteht daher darin, eine zum Stand der Technik verbesserte Haltevorrichtung zu schaffen. Insbesondere sollen die oben angeführten Nachteile behoben werden. Vor allem soll es möglich sein, dass das dentale Werkstück nach einer Entnahme wieder exakt und lagemäßig möglichst unverändert in der Haltevorrichtung aufgenommen werden kann.

Dies wird durch eine Haltevorrichtung mit den Merkmalen von Anspruch 1 gelöst. Demnach ist erfindungsgemäß vorgesehen, dass der Haltering ein inneres Ringelement, an welchem die zumindest eine Auflagefläche angebracht oder ausgebildet ist und an welcher das zumindest eine Einspannelement bewegbar gelagert ist, ein äußeres Ringelement und eine Fixiervorrichtung zum lösbaren Fixieren des inneren Ringelements am äußeren Ringelement aufweist. In anderen Worten ist also der Haltering (in Umfangsrichtung) zweigeteilt ausgebildet. Das äußere Ringelement verbleibt immer an der restlichen Maschine, während das dentale Werkstück mitsamt dem inneren Ringelement gelöst werden kann. Das heißt, das dentale Werkstück wird gar nicht von den radial nach innen ragenden Auflageflächen gelöst, sondern verbleibt an diesen Auflageflächen und den Einspannelementen des inneren Ringelements. Wenn das dentale Werkstück wieder eingesetzt werden soll, so ist es nur notwendig, das innere Ringelement mit dem äußeren Ringelement über die Fixiervorrichtung (vorzugsweise formschlüssig) zu verbinden.

Bevorzugte Ausführungsbeispiele der vorliegenden Erfindung sind in den abhängigen Ansprüchen angegeben.

Beispielsweise sieht ein bevorzugtes Ausführungsbeispiel vor, dass die Spannvorrichtung mehrere, vorzugsweise drei, regelmäßig um die Zentralachse angeordnete, gleichmäßig von der Zentralachse beabstandete und am inneren Ringelement angebrachte Einspannelemente und mehrere, vorzugsweise drei, regelmäßig um die Zentralachse angeordnete, gleichmäßig von der Zentralachse beabstandete und am inneren Ringelement angeordnete Auflageflächen aufweist. Natürlich ist es auch möglich, dass noch mehr - z. B. vier oder fünf - Einspannelemente bzw. Auflageflächen vorgesehen sind.

Zur Zentralachse ist auszuführen, dass diese zentral durch den vom Haltering umgebenen Raum führt. Dieser Raum entspricht einem Aufnahmebereich für das dentale Werkstück. Anders ausgedrückt formt bzw. begrenzt der Haltering einen Aufnahmebereich, in welchen das scheibenförmige dentale Werkstück korrespondierend einsetzbar ist. Der Haltering erstreckt sich im Wesentlichen entlang einer rechtwinklig zur Zentralachse ausgerichteten Ebene.

Wenn ein scheibenförmiges dentales Werkstück verwendet wird, so ist dieses dentale Werkstück im Wesentlichen zylindrisch um diese Zentralachse ausgebildet, besonders bevorzugt in Form eines geraden Kreiszylinders.

Die zumindest eine Auflagefläche ist quer zur Zentralachse ausgerichtet. Die zumindest eine Auflagefläche kann eine abgerundete Oberfläche aufweisen. Bevorzugt ist allerdings vorgesehen, dass die zumindest eine Auflagefläche eben ausgebildet ist und rechtwinklig zur Zentralachse verläuft.

Die genaue Ausbildung des zumindest einen Einspannelements ist an sich beliebig, solange über das Einspannelement das dentale Werkstück fest am Haltering einspannbar ist. Es kann vorgesehen sein, dass das zumindest eine Einspannelement als in radialer Richtung automatisch, vorzugsweise pneumatisch, bewegbarer Haltebolzen ausgebildet ist. Bevorzugt ist allerdings vorgesehen, dass das zumindest eine Einspannelement einen im inneren Ringelement um eine Drehachse drehbar gelagerten Achsbolzen und eine im Wesentlichen rechtwinkelig zur Drehachse ausgerichtete und mit dem Achsbolzen verbundene, vorzugsweise parallel zur Auflagefläche ausgerichtete, Spannfläche aufweist.

Die Fixiervorrichtung kann an sich beliebig ausgebildet sein, solange eine feste Verbindung zwischen dem inneren Ringelement und dem äußeren Ringelement erreicht werden kann. Eine mögliche Ausführungsform besteht darin, dass die Fixiervorrichtung als automatisch betätigbare, vorzugsweise pneumatische, Fixiervorrichtung ausgebildet ist. Bevorzugt ist allerdings eine manuelle Betätigung (z. B. mit Spannschrauben) vorgesehen. Erfindungsgemäß ist vorgesehen, dass die Fixiervorrichtung zumindest ein, am äußeren Ringelement angebrachtes oder ausgebildetes Auflageelement, ein am inneren Ringelement angebrachtes oder ausgebildetes, mit dem Auflageelement korrespondierendes Auflagegegenstück und zumindest ein am äußeren Ringelement bewegbar gelagertes Fixierelement aufweist, wobei in einer Fixierstellung das innere Ringelement zwischen dem Fixierelement und dem Auflageelement fixierbar ist.

Es ist vorgesehen, dass die Fixiervorrichtung mehrere, vorzugsweise drei, regelmäßig um die Zentralachse angeordnete, gleichmäßig von der Zentralachse beabstandete und am äußeren Ringelement angeordnete Auflageelemente, mehrere, vorzugsweise drei, regelmäßig um die Zentralachse angeordnete, gleichmäßig von der Zentralachse beabstandete und am inneren Ringelement angeordnete Auflagegegenstücke und mehrere, vorzugsweise drei, regelmäßig am äußeren Ringelement angeordnete Fixierelemente aufweist.

Es ist für eine exakte Positionierung und Fixierung vorgesehen, dass das zumindest eine Fixierelement einen im äußeren Ringelement um eine Drehachse drehbar gelagerten Achsbolzen und eine im Wesentlichen rechtwinkelig zur Drehachse ausgerichtete und mit dem Achsbolzen verbundene Fixierfläche aufweist.

Gemäß einem besonders bevorzugten Ausführungsbeispiel ist vorgesehen, dass an einer dem inneren Ringelement zugewandten Innenfläche des äußeren Ringelements ein Positionierelement, vorzugsweise eine Positioniernase, angeordnet ist und an einer dem äußeren Ringelement zugewandten Außenfläche des inneren Ringelements ein mit dem Positionierelement korrespondierendes Positioniergegenstück angeordnet ist. Dadurch wird ein positionsgetreues Wiedereinsetzen des inneren Ringelements ermöglicht. Da zwischen dem Positionierelement und dem Positioniergegenstück praktisch kein Spiel vorhanden ist, ist eine Wiederholgenauigkeit in axialer und radialer Richtung von weniger als 0,01 Millimetern, vorzugsweise von ca. 0,003 Millimetern, gegeben. Das Positionierelement und das Positioniergegenstück sind nur an einer Stelle eines 360°-Bereichs um die Zentralachse angeordnet. Somit ist eine absolute Positioniergenauigkeit gegeben.

Die genaue Ausbildung der Spannvorrichtung und der Fixiervorrichtung ist beliebig, solange eben ein Einspannen bzw. Fixieren möglich ist. Um eine einfache und massentaugliche Fertigung zu ermöglichen, ist bevorzugt vorgesehen, dass die einzelnen Komponenten der Fixiervorrichtung und der Spannvorrichtung im Wesentlichen identisch ausgebildet sind. Im Speziellen betrifft dies das Einspannelement und das Fixierelement. Diese können jeweils als Spannschrauben (oder sogenannte Spannpratzen) ausgebildet sein. Die Fixierelemente und Einspannelemente sind jeweils über ein Werkzeug manuell betätigbar. Im Speziellen kann ein Verdrehen um die jeweilige Drehachse erfolgen, sodass ein Wechsel zwischen einer Fixier- bzw. Spannstellung und einer jeweiligen Lösestellung möglich ist.

Zum Haltering ist allgemein auszuführen, dass die genaue Form an sich beliebig ist, solange eben das dentale Werkstück entsprechend aufgenommen werden kann. Wenn also das dentale Werkstück im Wesentlichen quaderförmig ausgebildet ist, so kann der Haltering entsprechende viereckige Form bzw. eine viereckige Innenfläche aufweisen. Bevorzugt ist allerdings vorgesehen, dass der Haltering im Wesentlichen kreisringförmig ausgebildet ist.

Wenn der Haltering (im Querschnitt) im Wesentlichen kreisringförmig ausgebildet ist, so sollte der Innendurchmesser an den Außendurchmesser des (scheibenförmigen) dentalen Werkstücks angepasst sein. Gemäß einem bevorzugten Ausführungsbeispiel beträgt der Innendruchmesser des Halterings (ohne die radial vorragenden Auflageflächen und Einspannelemente) zwischen 70 mm und 125 mm, vorzugsweise zwischen 85 mm und 105 mm. Besonders bevorzugt beträgt der Innendurchmesser 95 mm.

Bevorzugt kann vorgesehen sein, dass das innere Ringelement (bzw. dessen Innenfläche im Querschnitt) im Wesentlichen kreisringförmig ausgebildet ist. Wenn dem so ist, ist bevorzugt vorgesehen, dass der Außendurchmesser des inneren Ringelements zwischen 100 mm und 140 mm, vorzugsweise zwischen 110 mm und 130 mm, besonders bevorzugt zwischen 120 mm und 125 mm, beträgt.

Weiters ist bevorzugt vorgesehen, dass das Verhältnis von Innendurchmesser des Halterings zu Außendurchmesser des inneren Ringelements zwischen 1 zu 1,2 und 1 zu 1,35, besonders bevorzugt zwischen 1 zu 1,25 und 1 zu 1,3, liegt. Das heißt, der Außendurchmesser des inneren Ringelements ist um etwa ein Viertel größer als der Innendurchmesser des Halterings.

Es ist auch bevorzugt vorgesehen, dass das äußere Ringelement (bzw. dessen Innenfläche im Querschnitt) im Wesentlichen kreisringförmig ausgebildet ist und einen mit Außendurchmesser des inneren Ringelements korrespondierenden Innendurchmesser aufweist. Für den Innendurchmesser des äußeren Ringelements werden die radial nach innen ragenden Auflageelemente bzw. Fixierelemente nicht berücksichtigt. Mithin gelten für das Verhältnis von Innendurchmesser des äußeren Ringelements zum Innendurchmesser des gesamten Halterings im Wesentlichen dieselben Werte wie für das Verhältnis von Außendurchmesser des inneren Ringelements zum Innendurchmesser des gesamten Halterings.

Die Haltevorrichtung kann an sich so ausgebildet sein, dass sie feststehend zu einem Träger ausgebildet ist. Wenn dem so ist, dann ist es notwendig, dass für eine Bearbeitung des dentalen Werkstücks sämtliche räumliche Bewegungen von einem Bearbeitungswerkzeug durchgeführt werden können.

Um hier eine bessere Konstruktion und Handhabung zu ermöglichen, ist bevorzugt eine, vorzugsweise ringförmig ausgebildete, Halteringaufnahme vorgesehen, an welcher der Haltering bewegbar, vorzugsweise drehbar, gelagert ist.

Besonders bevorzugt kann zudem eine, vorzugsweise an der Halteringaufnahme angebrachte, erste Antriebsvorrichtung zum Bewegen, vorzugsweise Drehen, des Halterings relativ zur Halteringaufnahme vorgesehen sein. Die erste Antriebsvorrichtung kann elektromotorisch ausgeführt sein.

Gemäß einem weiteren bevorzugten Ausführungsbeispiel ist ein Träger vorgesehen, an welchem die Halteringaufnahme - angetrieben durch eine zweite Antriebsvorrichtung - bewegbar, vorzugsweise drehbar, gelagert ist. Auch diese zweite Antriebsvorrichtung kann elektromotorisch ausgeführt sein.

Schutz wird auch begehrt für eine Bearbeitungsvorrichtung zum Bearbeiten eines dentalen Werkstücks, welche eine erfindungsgemäße Haltevorrichtung aufweist.

Diese Bearbeitungsvorrichtung ist bevorzugt als CNC-Bearbeitungsmaschine ausgebildet. Besonders bevorzugt umfasst die Bearbeitungsvorrichtung ein Gehäuse, zumindest eine relativ zum Gehäuse bewegbare Bearbeitungsspindel, zumindest eine dritte Antriebsvorrichtung zum Bewegen der Bearbeitungsspindel relativ zum Gehäuse, zumindest ein an der Bearbeitungsspindel angebrachtes Bearbeitungswerkzeug, vorzugsweise in Form eines Fräsers, und eine vierte Antriebsvorrichtung zum Bewegen, vorzugsweise Drehen, des Bearbeitungswerkzeugs relativ zur Bearbeitungsspindel. Auch die dritte und vierte Antriebsvorrichtung weisen bevorzugt Elektromotoren auf.

Weiters ist bevorzugt vorgesehen, dass der Träger der Haltevorrichtung am Gehäuse der Bearbeitungsvorrichtung angebracht ist oder einstückig mit diesem Gehäuse ausgebildet ist. Mithin ist der Haltering der Haltevorrichtung relativ zum Gehäuse der Bearbeitungsvorrichtung bewegbar.

Die Bearbeitungsvorrichtung kann auch eine Steuer- oder Regeleinheit aufweisen. Von dieser Steuer- oder Regeleinheit kann ein Bearbeitungsprogramm abgearbeitet werden. Das heißt, in Abhängigkeit dieses Bearbeitungsprogramms werden die Haltevorrichtung und die restlichen Komponenten der Bearbeitungsvorrichtung angesteuert. Z. B. kann mittels des Bearbeitungsprogramms anhand eines 3D-Datensatzes ein dentaler Rohling aus dem dentalen Werkstück herausgearbeitet werden. Ein solcher Rohling kann beispielsweise in Form eines Abutments, einer Krone, einer Brücke, eines einzelnen Zahns, usw. ausgebildet sein. Dieser entstandene Rohling kann dann in späterer Folge weiterverarbeitet (z. B. gesintert) werden, um schlussendlich von einem Dentalfachmann an einem Patienten eingesetzt zu werden.

Schutz wird darüber hinaus begehrt für eine Anordnung umfassend eine Bearbeitungsvorrichtung und ein dentales Werkstück. Besonders bevorzugt umfasst diese Anordnung ein im Wesentlichen scheibenförmig ausgebildetes dentales Werkstück. Besonders bevorzugt ist genau ein einziges scheibenförmiges (bzw. kreiszylinderförmiges) dentales Werkstück im Haltering der Haltevorrichtung einspannbar bzw. eingespannt.

Wie bereits erwähnt betrifft die Erfindung auch ein Verfahren zum Bearbeiten eines, insbesondere scheibenförmigen, dentalen Werkstücks in einer erfindungsgemäßen Bearbeitungsvorrichtung. Dabei sind die Schritte Aufnehmen des dentalen Werkstücks im Haltering, Einspannen des dentalen Werkstücks über die Spannvorrichtung am Haltering und Bearbeiten des dentalen Werkstücks durch das Bearbeitungswerkzeug vorgesehen. Derartige Schritte sind bei CNC-Bearbeitungsmaschinen gängig und bereits bekannt.

Die oben bereits angeführte Aufgabe der vorliegenden Erfindung wird auch durch ein Verfahren gemäß den Merkmalen von Anspruch 11 gelöst. Demnach sind die Schritte Lösen des inneren Ringelements mitsamt dem darin eingespannten bearbeiteten dentalen Werkstücks vom äußeren Ringelement, Verbringen des inneren Ringelements mitsamt dentalem Werkstück zu einer weiteren Bearbeitungsvorrichtung, vorzugsweise einer Messvorrichtung, oder zu einem Ablageort, Wiedereinsetzen des inneren Ringelements mitsamt dentalem Werkstück in das äußere Ringelement, positionsgetreues Fixieren des inneren Ringelements am äußeren Ringelement und Fortsetzen der Bearbeitung dieses im inneren Ringelement eingespannten dentalen Werkstücks vorgesehen.

Das Lösen des inneren Ringelements erfolgt bevorzugt manuell mit einem entsprechenden Werkzeug. Auch das Verbringen oder Transportieren des inneren Ringelements kann händisch erfolgen. Beispielsweise kann das Ringelement samt dentalem Werkstück zu einer anderen Bearbeitungsvorrichtung gebracht werden, in welcher das dentale Werkstück mit einem anderen Bearbeitungswerkzeug bearbeitet wird. Besonders bevorzugt ist allerdings vorgesehen, dass das dentale Werkstück zu einer Mess- oder Inspiziervorrichtung gebracht wird, in welcher das dentale Werkstück vermessen wird. Die bei dieser Vermessung erhaltenen Daten können dann bei einer weiteren Bearbeitung verwendet bzw. berücksichtigt werden. Das Wiedereinsetzen des inneren Ringelements am äußeren Ringelement erfolgt bevorzugt ebenfalls wieder händisch mit einem entsprechenden Werkzeug, wobei für das positionsgetreue Fixieren vorzugsweise das Positionierelement und das Positioniergegenstück verwendet werden. Dann kann die Bearbeitung des dentalen Werkstücks wiederaufgenommen bzw. fortgesetzt werden.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: perspektivisch das innere Ringelement,
- Fig. 2: eine Draufsicht auf das innere Ringelement gemäß Fig. 1,
- Fig. 3: perspektivisch das innere Ringelement mit Einspannelement in Einspannstellung,
- Fig. 4: eine Draufsicht auf das innere Ringelement gemäß Fig. 3,
- Fig. 5: perspektivisch ein dentales Werkstück,
- Fig. 6: perspektivisch das innere Ringelement samt eingespanntem dentalen Werkstück,
- Fig. 7: eine Draufsicht passend zu Fig. 6,
- Fig. 8: perspektivisch das äußere Ringelement samt Halteringaufnahme und Träger,
- Fig. 9: eine Draufsicht passend zu Fig. 8,
- Fig. 10: perspektivisch eine Haltevorrichtung beim Zusammensetzen,
- Fig. 11: perspektivisch die zusammengesetzte Haltevorrichtung,
- Fig. 12: eine Draufsicht auf eine Haltevorrichtung mit Schnittlinien,
- Fig. 13: den Schnitt A-A durch die Haltevorrichtung gemäß Fig. 12,
- Fig. 14: den Schnitt B-B durch die Haltevorrichtung gemäß Fig. 12,
- Fig. 15: eine Draufsicht auf eine teilweise pneumatisch betätigte Haltevorrichtung mit Schnittlinien,
- Fig. 16: den Schnitt E-E durch die Haltevorrichtung gemäß Fig. 15,
- Fig. 17: den Schnitt F-F durch die Haltevorrichtung gemäß Fig. 15,
- Fig. 18: schematisch eine Bearbeitungsvorrichtung und
- Fig. 19: schematisch einen Verfahrensablauf zum Bearbeiten eines dentalen Werkstücks.

In Fig. 1 ist in einer perspektivischen Darstellung ein Teil eines Halterings 2 - konkret ein inneres Ringelement 6 - dargestellt. Dieses innere Ringelement 6 ist um eine Zentralachse Z herum ringförmig ausgebildet. Das innere Ringelement 6 (wie auch der gesamte Haltering 2) erstreckt sich entlang einer rechtwinkelig zur Zentralachse Z ausgerichteten Ebene. Das innere Ringelement 6 weist Auflageflächen 4 auf. Diese Auflageflächen 4 ragen radial in Richtung der Zentralachse Z in einen Aufnahmebereich B der Haltevorrichtung 1 hinein. Zudem sind am inneren Ringelement 6 Einspannelemente 5 angeordnet. Diese Einspannelemente 5 umfassen einen Achsbolzen 9 und eine Spannfläche 10. Der Achsbolzen 9 ist mitsamt der Spannfläche 10 um die (parallel zur Zentralachse Z ausgerichtete) Drehachse D drehbar. Das Einspannelement 5 weist an seiner Oberfläche eine (in diesem Fall sechseckig ausgebildete) Vertiefung 25 auf, in welches ein entsprechendes Werkzeug (z. B. ein Sechskant) eingreifen kann. Durch Betätigung des Einspannelements 5 über das Werkzeug ist die Spannvorrichtung 3 von einer Lösestellung LS in eine Einspannstellung ES bewegbar und umgekehrt. Die Auflagefläche 4 ist rechtwinkelig zur Zentralachse Z ausgerichtet. Dasselbe gilt für die Spannfläche 10 des Einspannelements 5.

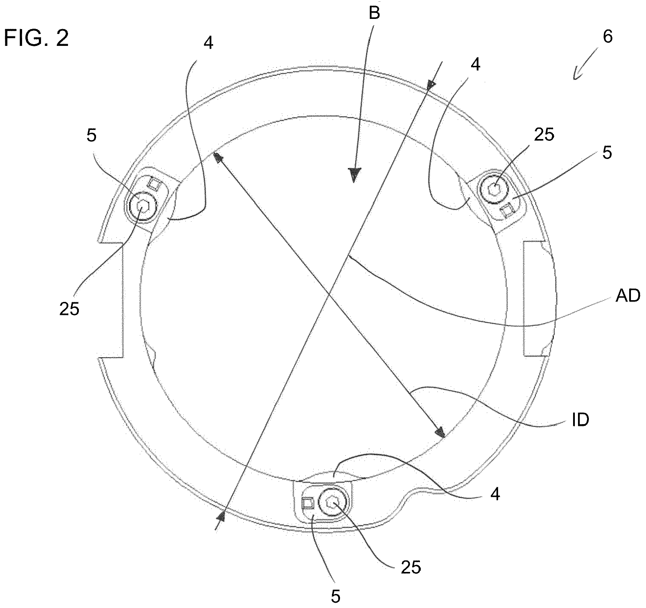

In Fig. 2 ist das innere Ringelement 6 gemäß Fig. 1 in einer Draufsicht dargestellt. Ersichtlich ist, dass die drei Auflageflächen 4 sowie die drei Einspannelemente 5 der Spannvorrichtung 3 regelmäßig um die Zentralachse Z herum angeordnet sind, radial nach innen vorragen und jeweils denselben Abstand zur Zentralachse Z aufweisen. Es ist auch erkennbar, dass sich das innere Ringelement 6 um den Aufnahmebereich B herum erstreckt. Der Innendurchmesser ID dieses inneren Ringelements 6 beträgt - ohne Berücksichtigung der radial vorragenden Auflageflächen 4 - zwischen 85 mm und 105 mm. Bei einem konkreten Ausführungsbeispiel beträgt der Innendurchmesser ID 95 mm. Der Außendurchmesser AD dieses inneren Ringelements 6 liegt zwischen 110 mm und 130 mm. Bei einem konkreten Ausführungsbeispiel beträgt der Außendurchmesser AD 122 mm. Dadurch ergibt sich ein Verhältnis von Innendurchmesser ID zu Außendurchmesser AD von etwa 1 zu 1,27.

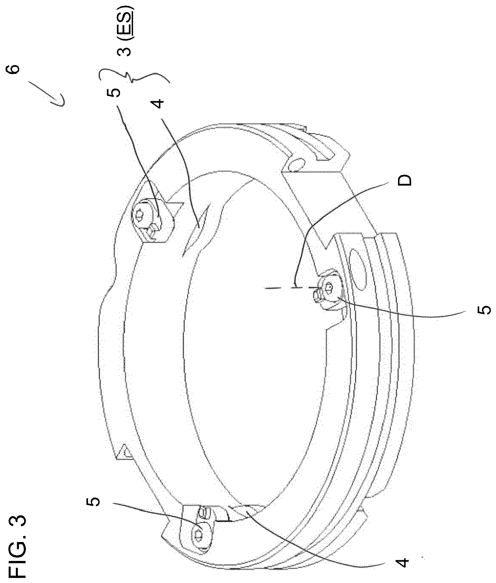

In Fig. 3 ist das innere Ringelement 6 wieder perspektivisch dargestellt, wobei sich die Spannvorrichtung 3 nun in der Einspannstellung ES befindet. Dies ist dadurch erfolgt, dass das Einspannelement 5 durch entsprechende Betätigung um die Drehachse D um etwa 90° gedreht wurde.

Fig. 4 zeigt eine zu Fig. 3 korrespondierende Draufsicht auf das innere Ringelement 6. Es ist ersichtlich, dass sich die Spannflächen 10 der Einspannelemente 5 nun in Richtung der Zentralachse Z gesehen genau oberhalb der Auflageflächen 4 befinden. Das heißt, die Spannflächen 10 ragen in dieser Einspannstellung ES radial in Richtung der Zentralachse Z in den Aufnahmebereich B hinein.

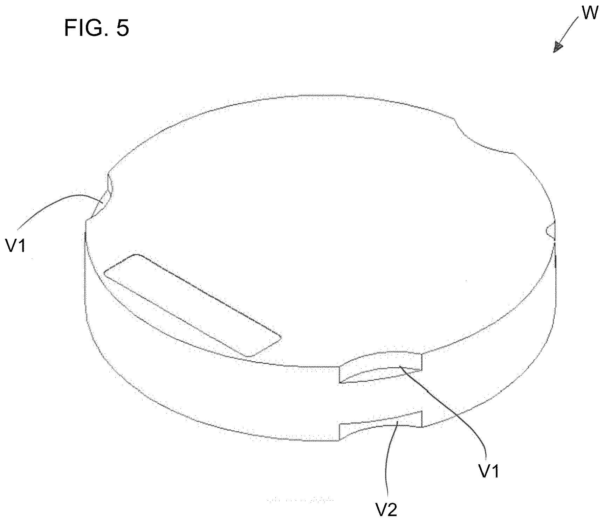

Fig. 5 zeigt perspektivisch ein dentales Werkstück W. Dieses dentale Werkstück ist im Wesentlichen scheibenförmig - konkret kreiszylinderförmig - ausgebildet.

An seitlichen Bereichen dieses dentalen Werkstücks sind die Vertiefungen V1 und V2 ausgebildet. Die Vertiefung V1 korrespondiert mit dem Einspannelement 5, während die Vertiefung V2 mit der Auflagefläche 4 korrespondiert. Das dentale Werkstück W ist so ausgebildet, dass es im Wesentlichen dieselben Maße, wie der Aufnahmebereich B des Halterings 2 aufweist. Gemäß einem bevorzugten Ausführungsbeispiel weist das dentale Werkstück W einen Außendurchmesser von 95 mm auf.

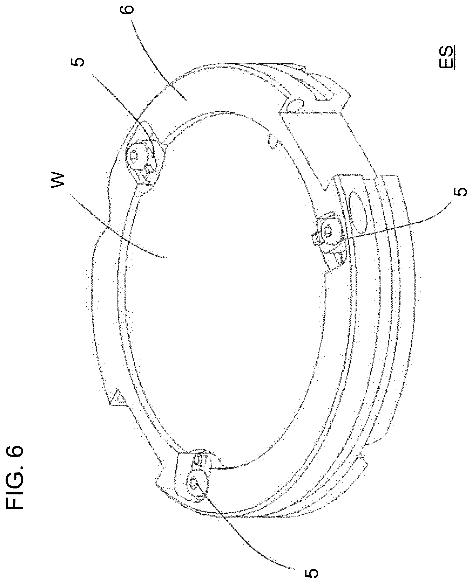

In Fig. 6 ist ersichtlich, wie das dentale Werkstück W in das innere Ringelement 6 eingesetzt und über die Spannvorrichtung 3 festgespannt ist. Konkret befinden sich die Einspannelemente 5 der Spannvorrichtung 3 in der Einspannstellung ES, sodass das dentale Werkstück W über dessen Vertiefungen V1 und V2 zwischen den Spannflächen 10 und den Auflageflächen 4 der Spannvorrichtung 3 eingespannt ist. Dadurch ist eine feste Verbindung bzw. Fixierung des dentalen Werkstücks W am inneren Ringelement 6 erreicht.

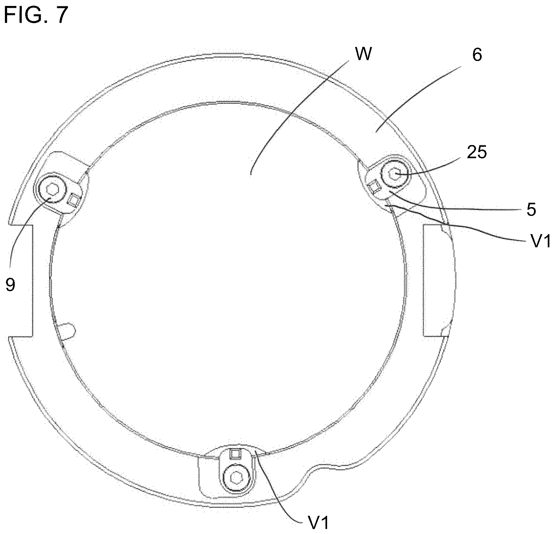

Fig. 7 zeigt eine Draufsicht auf das innere Ringelement 6 und das darin eingespannte dentale Werkstück W gemäß Fig. 6.

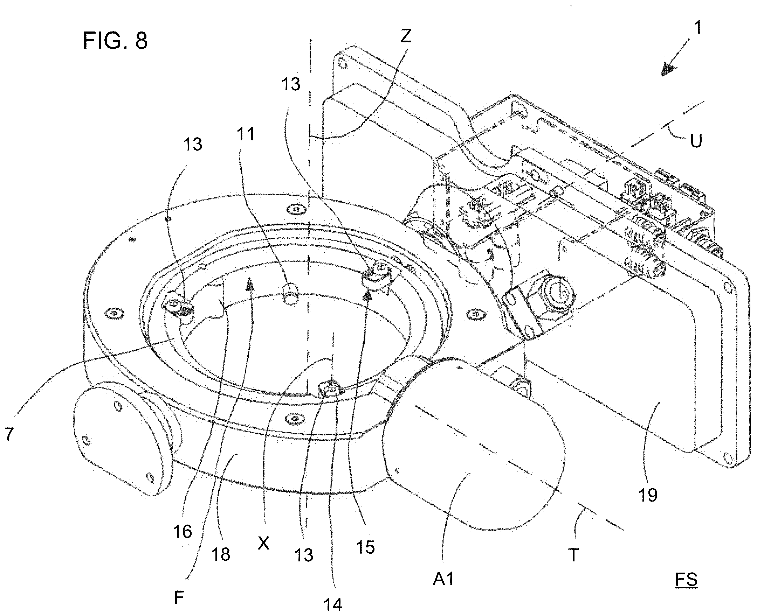

Fig. 8 zeigt in einer perspektivischen Darstellung andere wesentliche Komponenten der Haltevorrichtung 1. In diesem Fall sind das innere Ringelement 6 und das dentale Werkstück W (noch) nicht dargestellt. Dagegen ist das äußere Ringelement 7 ersichtlich. Auch dieses erstreckt sich um die Zentralachse Z. Das äußere Ringelement 7 erstreckt sich entlang einer rechtwinklig zur Zentralachse Z ausgerichteten Ebene. Am äußeren Ringelement 7 sind Auflageelemente 11 angeordnet. Diese Auflageelemente 11 ragen radial in Richtung der Zentralachse Z. Diese Auflageelemente 11 sind an einer dem inneren Ringelement 6 zugewandten Innenfläche F des äußeren Ringelements 7 angeordnet bzw. ausgebildet. Konkret sind die Auflageelemente 11 in etwa bolzenförmig ausgebildet. Zudem sind in dieser Fig. 8 die am äußeren Ringelement 7 angeordneten Fixierelemente 13 dargestellt. Hier befinden sich die Fixierelemente 13 in der Fixierstellung FS. Das heißt, die Fixierflächen 15 befinden sich aufgrund einer Drehung des Achsbolzens 14 um die Drehachse X in dieser Fixierstellung FS, in welcher die Fixierflächen 15 radial in Richtung der Zentralachse Z ragen.

Fig. 8 zeigt zusätzlich zum äußeren Ringelement 7 auch die Halteringaufnahme 18. Das äußere Ringelement 7 ist an der Halteringaufnahme 18 um die Achse T drehbar gelagert. Diese Bewegung wird durch die erste Antriebsvorrichtung A1 initiiert. Zudem zeigt Fig. 8 den Träger 19. An diesem Träger 19 ist die Halteringaufnahme 18 um die Achse U drehbar gelagert. Die Bewegung der Halteringaufnahme 18 um die Achse U wird durch die zweite Antriebsvorrichtung A2 initiiert bzw. gesteuert.

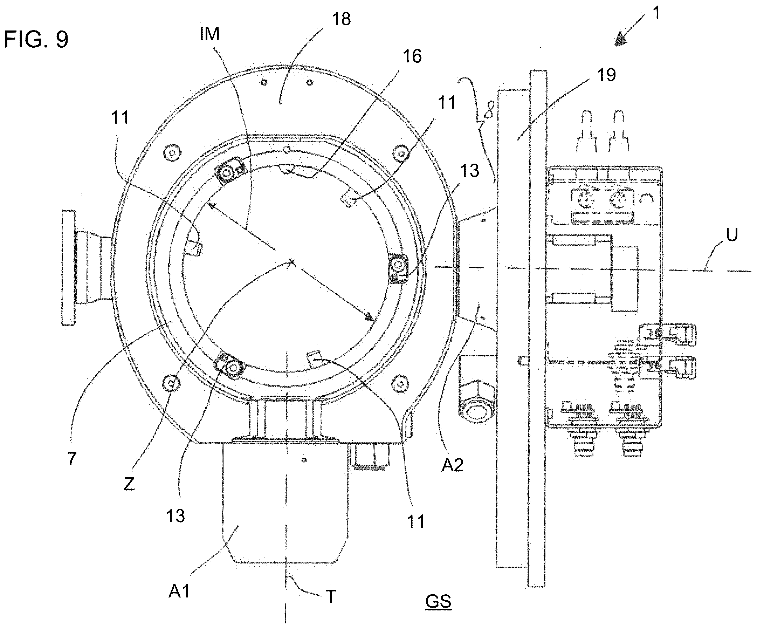

Fig. 9 zeigt eine Draufsicht auf die Haltevorrichtung 1 gemäß Fig. 8. Ein Unterschied besteht nur darin, dass sich die Fixierelemente 13 in der gelösten Stellung GS befinden. Ersichtlich sind die drei Auflageelemente 11, welche am äußeren Ringelement 7 angeordnet sind. Erkennbar ist in dieser Darstellung auch das Positionierelement 16, welches in Richtung der Zentralachse Z vom äußeren Ringelement 7 absteht. Eingezeichnet ist auch der Innendurchmesser IM des äußeren Ringelements 7 (ohne Berücksichtigung der radial nach innen ragenden Auflageelemente 11). Dieser Innendurchmesser IM korrespondiert mit dem Außendurchmesser AD des inneren Ringelements 6. Konkret beträgt dieser Innendurchmesser IM etwa 122 mm, sodass das innere Ringelement 6 möglichst genau hineinpasst.

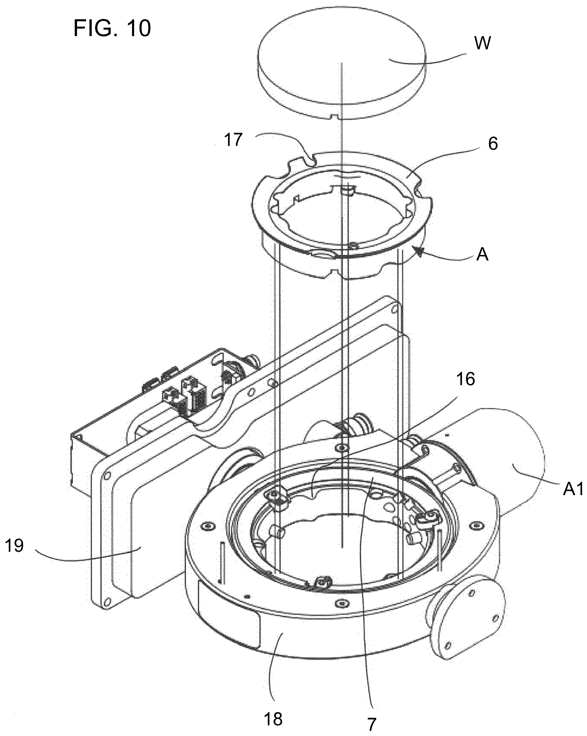

Ausgehend von dieser Fig. 9 kann das innere Ringelement 6 samt dentalem Werkstück W gemäß Fig. 6 in das äußere Ringelement 7 eingesetzt werden. In Fig. 10 ist diese Einsetzbewegung veranschaulicht. Das dentale Werkstück W und das innere Ringelement 6 werden von oben in das äußere Ringelement 7 eingesetzt. Für die genaue Positionierung ist an der Außenfläche A des inneren Ringelements 6 ein Positioniergegenstück 17 ausgebildet, welches mit dem Positionierelement 16 des äußeren Ringelements 7 korrespondiert und eine positionsgetreue Fixierung der beiden Ringelemente 7, 6 aneinander garantiert.

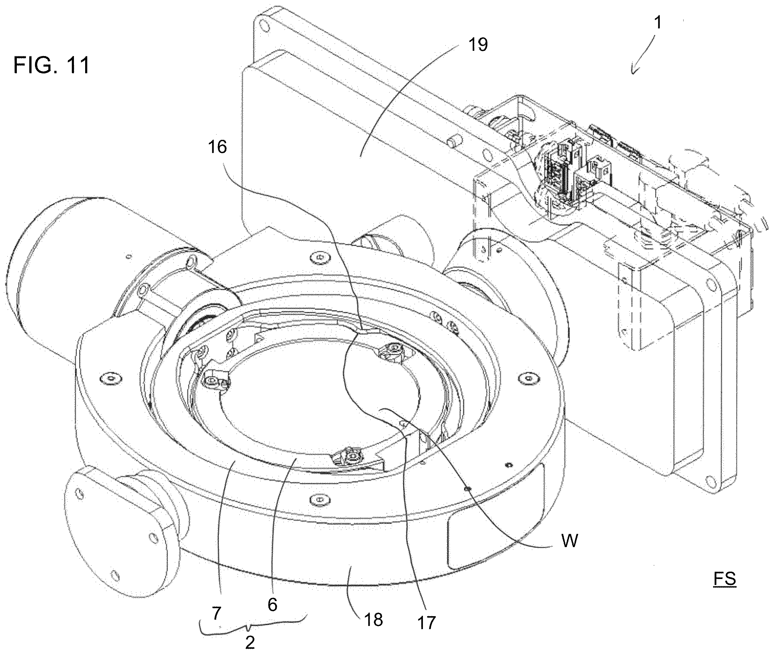

Sobald die Einsetzbewegung abgeschlossen ist, ergibt sich eine Haltevorrichtung 1, wie sie in Fig. 11 dargestellt ist. Durch entsprechendes Bewegen der Fixierelemente 13 wird das innere Ringelement 6 zwischen den Fixierelementen 13 und den Auflageelementen 11 der Fixiervorrichtung 8 eingespannt, wodurch die Fixierstellung FS gegeben ist. Das innere Ringelement 6 und das äußere Ringelement 7 bilden gemeinsam den Haltering 2 für das Werkstück W.

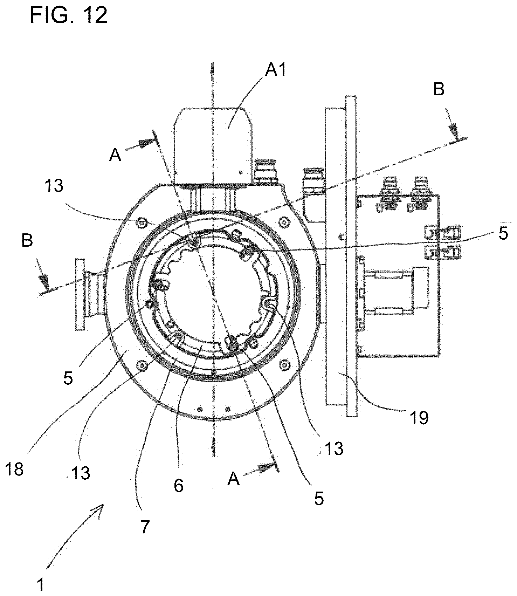

In Fig. 12 ist die Haltevorrichtung 1 in einer Draufsicht (ohne Werkstück W) dargestellt, wobei die Schnittlinien für die Schnitte A-A und B-B eingezeichnet sind. Beide Schnittlinien führen bereichsweise durch ein Fixierelement der Fixiervorrichtung 8. Die Schnittlinie für den Schnitt A-A führt zusätzlich durch ein Einspannelement 5 der Spannvorrichtung 3.

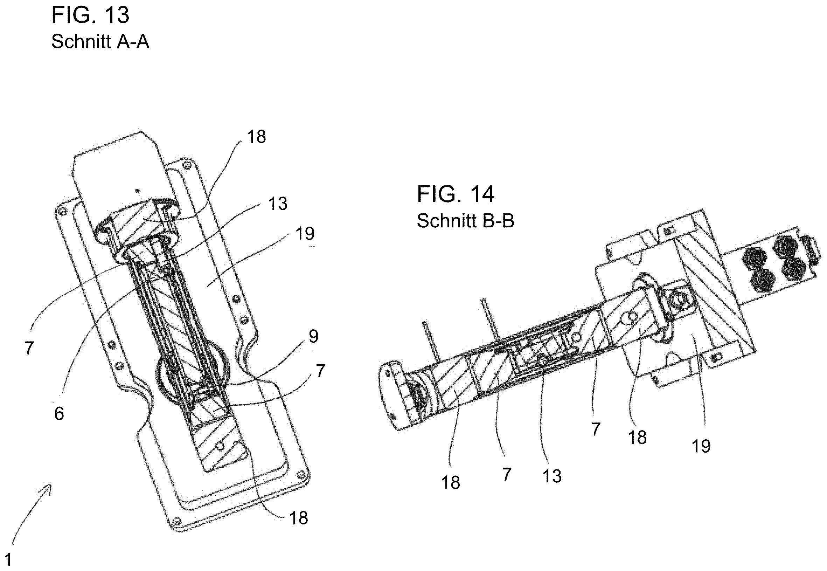

Fig. 13 zeigt den Schnitt A-A durch die Haltevorrichtung 1. Konkret ersichtlich ist das Fixierelement 13 im Querschnitt, welches das innere Ringelement 6 am äußeren Ringelement 7 hält. Ebenfalls ersichtlich ist der Achsbolzen des Einspannelements 5.

Fig. 14 zeigt den Schnitt B-B durch die Haltevorrichtung. Neben dem äußeren Ringelement 7 und der Halteringaufnahme 18 ist das Fixierelement ersichtlich.

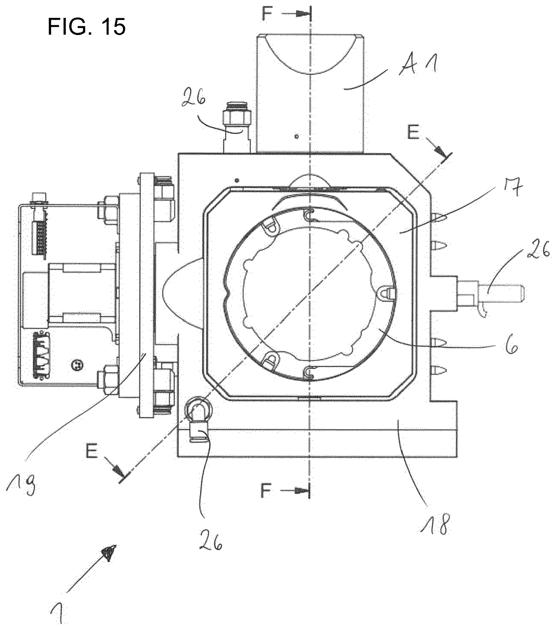

In Fig. 15 ist ein Ausführungsbeispiel dargestellt, in welchem sowohl die Spannvorrichtung 3 als auch die Fixiervorrichtung 8 pneumatisch betätigbar sind. In der Draufsicht gemäß Fig. 15 sind die Halteringaufnahme 18 und das äußere Ringelement 7 teilweise viereckig ausgebildet, während das innere Ringelement 6 im Wesentlichen kreisringförmig ausgebildet ist. Ersichtlich sind in Fig. 15 auch mehrere Pneumatikanschlüsse 26, welche mit einer nicht dargestellten Pneumatikdruckquelle in Verbindung stehen. In Fig. 15 sind die Schnittlinien der Schnitte E-E und F-F eingezeichnet.

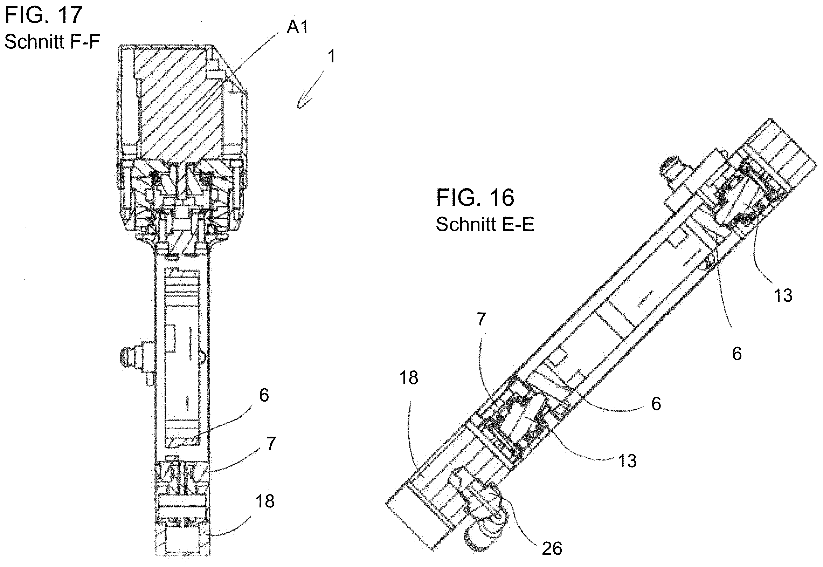

Fig. 16 zeigt den Schnitt E-E mit einem Pneumatikanschluss 26 im Querschnitt. Zudem sind zwei bolzenförmige, pneumatisch betätigbare Fixierelemente 13 im Querschnitt dargestellt.

Fig. 17 zeigt den Schnitt F-F durch die Haltevorrichtung 1.

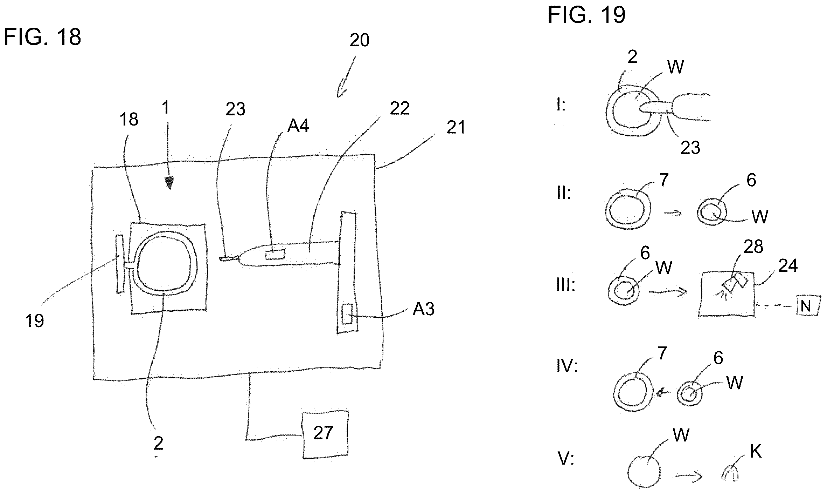

In Fig. 18 ist schematisch eine Bearbeitungsvorrichtung 20 dargestellt. Die Bearbeitungsvorrichtung 20 umfasst ein Gehäuse 21. Am Gehäuse 21 ist zumindest eine Bearbeitungsspindel 22, vorzugsweise linear, bewegbar gelagert. Diese Bewegung wird durch eine dritte Antriebsvorrichtung A3 initiiert. An der Bearbeitungsspindel 22 ist ein Bearbeitungswerkzeug 23, vorzugsweise in Form eines Fräsers, angebracht. Durch eine vierte Antriebsvorrichtung A4 ist das Bearbeitungswerkzeug 23 relativ zur Bearbeitungsspindel 22 bewegbar. Teil der Bearbeitungsvorrichtung 20 ist auch eine Haltevorrichtung 1. Diese Haltevorrichtung 1 umfasst den Träger 19, welcher am Gehäuse 21 befestigt. Am Träger 19 ist der Haltering 2 bewegbar gelagert. Über die Steuer- oder Regeleinheit 27 können die Bewegungen der einzelnen Komponenten gesteuert werden.

In Fig. 19 sind schematisch die einzelnen Schritte des Herstellungsverfahrens dargestellt. Gemäß Schritt I ist das Werkstück W im Haltering 2 eingespannt und wird vom Bearbeitungswerkzeug 23 bearbeitet. Im Schritt II wird das innere Ringelement 6 samt dem dentalen Werkstück W vom äußeren Ringelement 7 gelöst. In Schritt III ist schematisch dargestellt, wie das dentale Werkstück W samt innerem Ringelement 6 zu einer weiteren Bearbeitungsvorrichtung 24 transportiert wird. Diese Bearbeitungsvorrichtung 24 kann als Messvorrichtung ausgebildet, in welcher beispielsweise über eine Kamera 28 die Oberfläche des dentale Werkstücks W gescannt wird und dadurch Oberflächendaten N erzeugt werden. Dann wird gemäß Schritt IV das (halb-bearbeitete) dentale Werkstück W samt innerem Ringelement 6 wieder in das äußere Ringelement 7 positionsgetreu eingesetzt, sodass die in Schritt I gezeigt Bearbeitung des dentalen Werkstücks W fortgesetzt werden kann. Am Ende ergibt sich gemäß Schritt V eine Zahnersatz K, welcher dann einem Patienten eingesetzt werden kann.

### Bezugszeichenliste:

- 1: Haltevorrichtung
- 2: Haltering
- 3: Spannvorrichtung
- 4: Auflagefläche
- 5: Einspannelement
- 6: inneres Ringelement
- 7: äußeres Ringelement
- 8: Fixiervorrichtung
- 9: Achsbolzen
- 10: Spannfläche
- 11: Auflageelement
- 12: Auflagegegenstück
- 13: Fixierelement
- 14: Achsbolzen
- 15: Fixierfläche
- 16: Positionierelement
- 17: Positioniergegenstück
- 18: Halteringaufnahme
- 19: Träger
- 20: Bearbeitungsvorrichtung
- 21: Gehäuse
- 22: Bearbeitungsspindel
- 23: Bearbeitungswerkzeug
- 24: weitere Bearbeitungsvorrichtung
- 25: Vertiefung
- 26: Pneumatikanschlüsse
- 27: Steuer- oder Regeleinheit
- 28: Kamera
- A1: erste Antriebsvorrichtung
- A2: zweite Antriebsvorrichtung
- A3: dritte Antriebsvorrichtung
- A4: vierte Antriebsvorrichtung
- W: dentales Werkstück
- Z: Zentralachse
- ES: Einspannstellung
- D: Drehachse
- FS: Fixierstellung
- X: Drehachse
- F: Innenfläche
- A: Außenfläche
- LS: Lösestellung
- V1: Vertiefung
- V2: Vertiefung
- B: Aufnahmebereich
- T: Achse
- U: Achse
- GS: gelöste Stellung
- N: Oberflächendaten
- K: Zahnersatz
- ID: Innendurchmesser
- AD: Außendurchmesser
- IM: Innendurchmesser

## Patentansprüche

1. Haltevorrichtung (1) für ein, insbesondere scheibenförmiges, dentales Werkstück (W), mit
- einem um eine Zentralachse (Z) ausgebildeten Haltering (2) zum Aufnehmen des dentalen Werkstücks (W) und
- einer Spannvorrichtung (3) zum Einspannen des dentalen Werkstücks (W) am Haltering (2), wobei der Haltering (2)
- ein inneres Ringelement (6),
- ein äußeres Ringelement (7) und
- eine Fixiervorrichtung (8) zum lösbaren Fixieren des inneren Ringelements (6) am äußeren Ringelement (7) aufweist, wobei die Fixiervorrichtung (8) zumindest ein, am äußeren Ringelement (7) angebrachtes oder ausgebildetes Auflageelement (11), ein am inneren Ringelement (6) angebrachtes oder ausgebildetes, mit dem Auflageelement (11) korrespondierendes Auflagegegenstück (12) und zumindest ein am äußeren Ringelement (7) bewegbar gelagertes Fixierelement (13) aufweist, wobei in einer Fixierstellung (FS) das innere Ringelement (6) zwischen dem Fixierelement (13) und dem Auflageelement (11) fixierbar ist, wobei die Fixiervorrichtung (8) mehrere, vorzugsweise drei, regelmäßig am äußeren Ringelement (7) angeordnete Fixierelemente (13) aufweist, wobei jedes Fixierelement (13) einen im äußeren Ringelement (7) um eine Drehachse (X) drehbar gelagerten Achsbolzen (14) und eine im Wesentlichen rechtwinkelig zur Drehachse (X) ausgerichtete und mit dem Achsbolzen (14) verbundene Fixierfläche (15) aufweist, **dadurch gekennzeichnet,**
**dass** die Spannvorrichtung (3) zumindest eine, am Haltering (2) angebrachte oder ausgebildete, radial in Richtung der Zentralachse (Z) vorstehende Auflagefläche (4) für das dentale Werkstück (W) und zumindest ein am Haltering (2) bewegbar gelagertes Einspannelement (5) aufweist, wobei in einer Einspannstellung (ES) das dentale Werkstück (W) zwischen dem zumindest einen Einspannelement (5) und der zumindest einen Auflagefläche (4) einspannbar ist, und dass am inneren Ringelement (6) die zumindest eine Auflagefläche (4) angebracht oder ausgebildet ist und das zumindest eine Einspannelement (5) bewegbar gelagert ist, und dass die Fixiervorrichtung (8) mehrere, vorzugsweise drei, regelmäßig um die Zentralachse (Z) angeordnete, gleichmäßig von der Zentralachse (Z) beabstandete und am äußeren Ringelement (7) angeordnete Auflageelemente (11), und mehrere, vorzugsweise drei, regelmäßig um die Zentralachse (Z) angeordnete, gleichmäßig von der Zentralachse (Z) beabstandete und am inneren Ringelement (6) angeordnete Auflagegegenstücke (12) aufweist.

2. Haltevorrichtung nach Anspruch 1, **dadurch gekennzeichnet, dass** die Spannvorrichtung (3) mehrere, vorzugsweise drei, regelmäßig um die Zentralachse (Z) angeordnete, gleichmäßig von der Zentralachse (Z) beabstandete und am inneren Ringelement (6) angebrachte Einspannelemente (5) und mehrere, vorzugsweise drei, regelmäßig um die Zentralachse (Z) angeordnete, gleichmäßig von der Zentralachse (Z) beabstandete und am inneren Ringelement (6) angeordnete Auflageflächen (4) aufweist.

3. Haltevorrichtung nach Anspruch 1 oder 2, **dadurch gekennzeichnet, dass** das zumindest eine Einspannelement (5) einen im inneren Ringelement (6) um eine Drehachse (D) drehbar gelagerten Achsbolzen (9) und eine im Wesentlichen rechtwinkelig zur Drehachse (D) ausgerichtete und mit dem Achsbolzen (9) verbundene, vorzugsweise parallel zur Auflagefläche (4) ausgerichtete, Spannfläche (10) aufweist.

4. Haltevorrichtung nach einem der Ansprüche 1 bis 3, **dadurch gekennzeichnet, dass** an einer dem inneren Ringelement (6) zugewandten Innenfläche (F) des äußeren Ringelements (7) ein Positionierelement (16), vorzugsweise eine Positioniernase, angeordnet ist und an einer dem äußeren Ringelement (7) zugewandten Außenfläche (A) des inneren Ringelements (6) ein mit dem Positionierelement (16) korrespondierendes Positioniergegenstück (17) angeordnet ist.

5. Haltevorrichtung nach einem der Ansprüche 1 bis 4, **gekennzeichnet durch** eine, vorzugsweise ringförmig ausgebildete, Halteringaufnahme (18), an welcher der Haltering (2) bewegbar, vorzugsweise drehbar, gelagert ist.

6. Haltevorrichtung nach Anspruch 5, **gekennzeichnet durch** ein, vorzugsweise an der Halteringaufnahme (18) angebrachte, erste Antriebsvorrichtung (A1) zum Bewegen, vorzugsweise Drehen, des Halterings (2) relativ zur Halteringaufnahme (18).

7. Haltevorrichtung nach Anspruch 5 oder 6, **gekennzeichnet durch** einen Träger (19), an welchem die Halteringaufnahme (18) - angetrieben **durch** eine zweite Antriebsvorrichtung (A2) - bewegbar, vorzugsweise drehbar, gelagert ist.

8. Bearbeitungsvorrichtung (20) zum Bearbeiten eines dentalen Werkstücks (W), mit einer Haltevorrichtung (1) nach einem der Ansprüche 1 bis 7.

9. Bearbeitungsvorrichtung nach Anspruch 8, **gekennzeichnet durch** ein Gehäuse (21), zumindest eine relativ zum Gehäuse (21) bewegbare Bearbeitungsspindel (22), zumindest eine dritte Antriebsvorrichtung (A3) zum Bewegen der Bearbeitungsspindel (22) relativ zum Gehäuse (21), zumindest ein an der Bearbeitungsspindel (22) angebrachtes Bearbeitungswerkzeug (23), vorzugsweise in Form eines Fräsers, und eine vierte Antriebsvorrichtung (A4) zum Bewegen, vorzugsweise Drehen, des Bearbeitungswerkzeugs (23) relativ zur Bearbeitungsspindel (22).

10. Bearbeitungsvorrichtung nach Anspruch 9, **dadurch gekennzeichnet, dass** der Träger (19) der Haltevorrichtung (1) am Gehäuse (21) der Bearbeitungsvorrichtung (20) angebracht ist oder einstückig mit diesem Gehäuse (21) ausgebildet ist.

11. Verfahren zum Bearbeiten eines, insbesondere scheibenförmigen, dentalen Werkstücks (W) in einer Bearbeitungsvorrichtung (20) nach einem der Ansprüche 8 bis 10, mit den Schritten:
- Aufnehmen des dentalen Werkstücks (W) im Haltering (2),
- Einspannen des dentalen Werkstücks (W) über die Spannvorrichtung (3) am Haltering (2) und
- Bearbeiten des dentalen Werkstücks (W) durch das Bearbeitungswerkzeug (23),
**gekennzeichnet durch** die weiteren Schritte:
- Lösen des inneren Ringelements (6) mitsamt dem darin eingespannten bearbeiteten dentalen Werkstück (W) vom äußeren Ringelement (7),
- Verbringen des inneren Ringelements (6) mitsamt dentalem Werkstück (W) zu einer weiteren Bearbeitungsvorrichtung (24), vorzugsweise einer Messvorrichtung, oder zu einem Ablageort,
- Wiedereinsetzen des inneren Ringelements (6) mitsamt dentalem Werkstück (W) in das äußere Ringelement (7),
- positionsgetreues Fixieren des inneren Ringelements (6) am äußeren Ringelement (7) und
- Fortsetzen der Bearbeitung dieses im inneren Ringelement (6) eingespannten dentalen Werkstücks (W).

## Claims

1. A retaining device (1) for an, in particular disk-shaped, dental workpiece (W) comprising:
- a retaining ring (2) formed around a central axis (Z) for receiving the dental workpiece (W), and
- a clamping device (3) for clamping the dental workpiece (W) to the retaining ring (2),
wherein the retaining ring (2) has
- an inner ring element (6)
- an outer ring element (7), and
- a fixing device (8) for releasably fixing the inner ring element (6) to the outer ring element (7),
wherein the fixing device (8) has at least one supporting element (11) mounted or formed on the outer ring element (7), a counterpart supporting portion (12) mounted or formed on the inner ring element (6) and corresponding to the supporting element (11) and at least one fixing element (13) mounted moveably to the outer ring element (7), wherein in a fixing position (FS) the inner ring element (6) can be fixed between the fixing element (13) and the supporting element (11), wherein the fixing device (8) has a plurality of, preferably three, fixing elements (13) arranged regularly on the outer ring element (7), wherein each fixing element (13) has a spindle pin (14) mounted in the outer ring element (7) rotatably about an axis of rotation (X) and a fixing surface (15) oriented substantially at a right angle to the axis of rotation (X) and connected to the spindle pin (14),
**characterized in that**
the clamping device (3) has at least one supporting surface (4) for the dental workpiece (W) mounted or formed on the retaining ring (2) and projecting radially in the direction of the central axis (Z), and at least one clamping element (5) mounted moveably on the retaining ring (2), wherein in a clamping position (ES) the dental workpiece (W) can be clamped between the at least one clamping element (5) and the at least one supporting surface (4), and that on the inner ring element (6) the at least one supporting surface (4) is mounted or formed and the at least one clamping element (5) is moveably mounted, and that the fixing device (8) has a plurality of, preferably three, supporting elements (11) which are arranged regularly around the central axis (Z) and are uniformly spaced from the central axis (Z) and arranged on the outer ring element (7), and a plurality of, preferably three, counterpart supporting portions (12) which are arranged regularly around the central axis (Z) and spaced uniformly from the central axis (Z) and arranged on the inner ring element (6).

2. A retaining device as set forth in claim 1 **characterized in that** the clamping device (3) has a plurality of, preferably three, clamping elements (5) which are arranged regularly around the central axis (Z) and are uniformly spaced from the central axis (Z) and are mounted to the inner ring element (6) and a plurality of, preferably three, supporting surfaces (4) which are arranged regularly around the central axis (Z) and are uniformly spaced from the central axis (Z) and are arranged on the inner ring element (6).

3. A retaining device as set forth in claim 1 or 2 **characterized in that** the at least one clamping element (5) has a spindle pin (9) mounted in the inner ring element (6) rotatably about an axis of rotation (D) and a clamping surface (10) which is oriented substantially at a right angle to the axis of rotation (D) and connected to the spindle pin (9) and preferably oriented parallel to the supporting surface (4).

4. A retaining device as set forth in one of claims 1 through 3 **characterized in that** arranged at an inner surface (F) of the outer ring element (7), that faces towards the inner ring element (6), is a positioning element (16), preferably a positioning nose, and arranged at an outer surface (A) of the inner ring element (6), that faces towards the outer ring element (7), is a counterpart positioning portion (17) corresponding to the positioning element (16).

5. A retaining device as set forth in one of claims 1 through 4 **characterized by** a, preferably annular, retaining ring receiving means (18) at which the retaining ring (2) is mounted moveably, preferably rotatably.

6. A retaining device as set forth in claim 5 **characterized by** a first drive device (A1), mounted preferably to the retaining ring receiving means (18), for moving, preferably rotating, the retaining ring (2) relative to the retaining ring receiving means (18).

7. A retaining device as set forth in claim 5or 6 **characterized by** a carrier (19) to which the retaining ring receiving means (18) - driven by a second drive device (A2) - is mounted moveably, preferably rotatably.

8. A processing apparatus (20) for processing a dental workpiece (W) comprising a retaining device (1) as set forth in one of claims 1 through 7.

9. A processing apparatus as set forth in claim 8 **characterized by** a housing (21), at least one processing spindle (22) moveable relative to the housing (21), at least one third drive device (A3) for moving the processing spindle (22) relative to the housing (21), at least one processing tool (23) mounted to the processing spindle (22), preferably in the form of a milling cutter, and a fourth drive device (A4) for moving, preferably rotating, the processing tool (23) relative to the processing spindle (22).

10. A processing apparatus as set forth in claim 9 **characterized in that** the carrier (19) of the retaining device (1) is mounted to the housing (21) of the processing apparatus (20) or is in one piece with said housing (21).

11. A method for processing an, in particular disk-shaped, dental workpiece (W) in a processing apparatus (20) as set forth in one of claims 8 through 10 comprising the steps:
- receiving the dental workpiece (W) in the retaining ring (2),
- clamping the dental workpiece (W) to the retaining ring (2) by way of the clamping device (3), and
- processing the dental workpiece (W) by the processing tool (23),
**characterized by** the further steps:
- releasing the inner ring element (6) together with the processed dental workpiece (W) clamped therein from the outer ring element (7),
- passing the inner ring element (6) together with the dental workpiece (W) to a further processing apparatus (24), preferably a measuring apparatus, or to a storage location,
- refitting the inner ring element (6) together with the dental workpiece (W) in the outer ring element (7),
- positionally accurate fixing of the inner ring element (6) to the outer ring element (7), and
- continuing the processing of said dental workpiece (W) clamped in the inner ring element (6).

## Revendications

1. Dispositif de retenue (1) pour une pièce dentaire (W) en particulier en forme de disque, avec
- une bague de retenue (2) réalisée autour d'un axe central (Z), destinée à recevoir la pièce dentaire (W), et
- n dispositif de serrage (3) destiné à enserrer la pièce dentaire (W) sur la bague de retenue (2),
dans lequel la bague de retenue (2) présente
- n élément annulaire intérieur (6),
- un élément annulaire extérieur (7) et
- un dispositif de blocage (8) destiné à bloquer de manière amovible l'élément annulaire intérieur (6) sur l'élément annulaire extérieur (7),
dans lequel
le dispositif de blocage (8) présente au moins un élément d'appui (11) installé ou réalisé sur l'élément annulaire extérieur (7), une contre-pièce d'appui (12) correspondant à l'élément d'appui (11), installée ou réalisée sur l'élément annulaire intérieur (6) et au moins un élément de blocage (13) monté de manière à pouvoir être déplacé sur l'élément annulaire extérieur (7), dans lequel l'élément annulaire intérieur (6) peut être bloqué entre l'élément de blocage (13) et l'élément d'appui (11) dans une position de blocage (FS), dans lequel le dispositif de blocage (8) présente plusieurs, de préférence trois, éléments de blocage (13) disposés régulièrement sur l'élément annulaire extérieur (7), dans lequel chaque élément de blocage (13) présente un boulon d'axe (14) monté de manière à pouvoir tourner autour d'un axe de rotation (X) dans l'élément annulaire extérieur (7) et une face de blocage (15) orientée sensiblement à angle droit par rapport à l'axe de rotation (X) et reliée au boulon d'axe (14),
**caractérisé en ce que**
le dispositif de serrage (3) présente au moins une face d'appui (4), installée ou réalisée sur la bague de retenue (2), faisant saillie radialement en direction de l'axe central (Z), pour la pièce dentaire (W) et au moins un élément d'enserrage (5) monté de manière à pouvoir être déplacé sur la bague de retenue (2), dans lequel la pièce dentaire (W) peut être enserrée, dans une position d'enserrage (ES), entre l'au moins un élément d'enserrage (5) et l'au moins une face d'appui (4), et que l'au moins une face d'appui (4) est installée ou réalisée sur l'élément annulaire intérieur (6) et l'au moins un élément d'enserrage (5) est monté de manière à pouvoir être déplacé, et que le dispositif de blocage (8) présente plusieurs éléments d'appui (11) disposés régulièrement autour de l'axe central (Z), tenus à distance de l'axe central (Z) de manière homogène et plusieurs, de préférence trois, contre-pièces d'appui (12) disposées régulièrement autour de l'axe central (Z), tenus à distance de l'axe central (Z) de manière homogène et disposées sur l'élément annulaire intérieur (6).

2. Dispositif de retenue selon la revendication 1, **caractérisé en ce que** le dispositif de serrage (3) présente plusieurs, de préférence trois, éléments d'enserrage (5) disposés régulièrement autour de l'axe central (Z), tenus à distance de l'axe central (Z) de manière homogène et installés sur l'élément annulaire intérieur (6) et plusieurs, de préférence trois, faces d'appui (4) disposées régulièrement autour de l'axe central (Z), tenues à distance de l'axe central (Z) de manière homogène et disposées sur l'élément annulaire intérieur (6).

3. Dispositif de retenue selon la revendication 1 ou 2, **caractérisé en ce qu'**au moins un élément d'enserrage (5) présente un boulon d'axe (9) monté de manière à pouvoir tourner autour d'un axe de rotation (D) dans l'élément annulaire intérieur (6) et une face de serrage (10) orientée sensiblement à angle droit par rapport à l'axe de rotation (D) et reliée au boulon d'axe (9), de préférence orientée de manière parallèle par rapport à la face d'appui (4).

4. Dispositif de retenue selon l'une quelconque des revendications 1 à 3, **caractérisé en ce qu'**un élément de positionnement (16), de préférence un ergot de positionnement, est disposé sur une face intérieure (F) tournée vers l'élément annulaire intérieur (6), de l'élément annulaire extérieur (7) et une contre-pièce de positionnement (17) correspondant à l'élément de positionnement (16) est disposée sur une face extérieure (A), tournée vers l'élément annulaire extérieur (7), de l'élément annulaire intérieur (6).

5. Dispositif de retenue selon l'une quelconque des revendications 1 à 4, **caractérisé par** un logement de bague de retenue (18) réalisé de préférence avec une forme annulaire, sur lequel la bague de retenue (2) est montée de manière à pouvoir être déplacée, de préférence de manière à pouvoir être tournée.

6. Dispositif de retenue selon la revendication 5, **caractérisé par** un premier dispositif d'entraînement (A1) installé de préférence sur le logement de bague de retenue (18), destiné à déplacer, de préférence à faire tourner, la bague de retenue (2) par rapport au logement de bague de retenue (18).

7. Dispositif de retenue selon la revendication 5 ou 6, **caractérisé par** un support (19), sur lequel le logement de bague de retenue (18) est monté de manière à pouvoir être déplacé, de préférence de manière à pouvoir être tourné - tout en étant entraîné par un deuxième dispositif d'entraînement (A2).

8. Dispositif d'usinage (20) destiné à usiner une pièce dentaire (W), avec un dispositif de retenue (1) selon l'une quelconque des revendications 1 à 7.

9. Dispositif d'usinage selon la revendication 8, **caractérisé par** un boîtier (21), au moins une broche d'usinage (22) pouvant être déplacée par rapport au boîtier (21), au moins un troisième dispositif d'entraînement (A3) destiné à déplacer la broche d'usinage (22) par rapport au boîtier (21), au moins un outil d'usinage (23) installé sur la broche d'usinage (22), de préférence sous la forme d'une fraise, et un quatrième dispositif d'usinage (A4) destiné à déplacer, de préférence à faire tourner, l'outil d'usinage (23) par rapport à la broche d'usinage (22).

10. Dispositif d'usinage selon la revendication 9, **caractérisé en ce que** le support (19) du dispositif de retenue (1) est installé sur le boîtier (21) du dispositif d'usinage (20) ou est réalisé d'un seul tenant avec ledit boîtier (21).

11. Procédé destiné à usiner une pièce dentaire (W), en particulier en forme de disque, dans un dispositif d'usinage (20) selon l'une quelconque des revendications 8 à 10, avec les étapes :
- de logement de la pièce dentaire (W) dans la bague de retenue (2),
- d'enserrage de la pièce dentaire (W) par l'intermédiaire du dispositif de serrage (3) sur la bague de retenue (2), et
- d'usinage de la pièce dentaire (W) par l'outil d'usinage (23),
**caractérisé par** les autres étapes :
- de desserrage de l'élément annulaire intérieur (6) conjointement avec la pièce dentaire (W) usinée enserrée dans celui-ci, de l'élément annulaire extérieur (7),
- d'amenée de l'élément annulaire intérieur (6) conjointement avec la pièce dentaire (W) vers un autre dispositif d'usinage (24), de préférence un dispositif de mesure, ou vers un emplacement de dépôt,
- de réinsertion de l'élément annulaire intérieur (6) conjointement avec la pièce dentaire (W) dans l'élément annulaire extérieur (7),
- de blocage de l'élément annulaire intérieur (6) sur l'élément annulaire extérieur (7) de manière fidèle en termes de position, et
- de poursuite de l'usinage de ladite pièce dentaire (W) enserrée dans l'élément annulaire intérieur (6).
